# EUROPEAN PATENT SPECIFICATION

(11) **EP 4 541 536 B1**
(45) Date of publication and mention of the grant of the patent: **25.11.2026**
(21) Application number: 24201195.5
(22) Date of filing: 18.09.2024
(51) Int. Cl.: B26F 1/24, B26F 1/32

(54) **TOOLING CONFIGURATION FOR THE CREATION OF Z-CHANNELS IN WOVEN CERAMIC MATRIX COMPOSITE (CMC) PREFORMS**
WERKZEUGKONFIGURATION ZUR ERZEUGUNG VON Z-KANÄLEN IN VORFORMEN AUS GEWEBTEN KERAMISCHEN MATRIXVERBUNDSTOFF (CMC)
CONFIGURATION D'OUTILLAGE POUR LA CRÉATION DE CANAUX Z DANS DES PRÉFORMES COMPOSITES À MATRICE CÉRAMIQUE TISSÉE (CMC)

(30) Priority: 20.10.2023 US 202318491578
(43) Date of publication of application: 23.04.2025
(73) Proprietor: RTX Corporation, Farmington, CT 06032 (US)
(72) Inventor: FERNANDEZ, Robin H., East Hartford, 06118 (US); RIEHL, John D., East Hartford, 06118 (US); KOLE, Molly, East Hartford, 06118 (US)
(74) Representative: Dehns

(56) References cited:
- EP-A1- 4 344 843
- EP-B1- 2 067 757

## Description

### BACKGROUND

The present invention relates to the fabrication of ceramic matrix composites (CMCs) and, more particularly, to CMCs having improved properties for operating in gas turbine engines.

In the processing of CMCs, there is a need to infiltrate matrix within and around fibrous tow bundles to replace pore volume with dense matrix material. In a woven system, large voids often exist between adjacent tows of a preform. Such voids can become large defects after infiltration of the composite that are detrimental to composite properties. The pore network through a woven system is often highly tortuous for infiltrating reactant gases, which leads to uneven deposition through the thickness of the preform. The formation of z-channels can create more direct pathways for reactant gases. One current technique for z-channel formation includes piercing a fibrous preform in the through-thickness direction with a needle. However, the internal tooling required for certain components can obstruct the needle pathway, preventing it from fully piercing the preform. As such, improved tooling designs are desirable.

EP 2 067 757 B1 discloses a prior art method of manufacturing parts from a composite material with carbon fiber reinforcements.

EP 4 344 843 A1, which is prior art under Article 54 (3) EPC, discloses a spiked preform tooling for improved chemical vapor infiltration in CMCs.

### SUMMARY

From one aspect, there is provided a tooling assembly for use in forming z-channels in a fibrous ceramic preform as recited in claim 1.

There is also provided a method of forming z-channels in a fibrous ceramic preform as recited in claim 8.

There is also provided a method of forming a ceramic matrix composite component as recited in claim 14.

Features of embodiments are set forth in the dependent claims.

### BRIEF DESCRIPTION OF THE DRAWINGS

FIG. 1 is a simplified cross-sectional illustration of an airfoil preform for a blade or vane.
FIG. 2 is a perspective view of a tooling assembly used for perforating the airfoil preform of FIG. 1 with z-channels.
FIG. 3 is an elevation view of a mandrel belonging to the tooling assembly of FIG. 2.
FIG. 4 is a simplified cross-sectional illustration of the mandrel of FIG. 3 and one portion of an outer fixture of the tooling assembly of FIG. 2.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features and components not specifically shown in the drawings.

### DETAILED DESCRIPTION

This disclosure presents a tooling assembly designed for use with z-channeling needles. The tooling assembly includes internal and external fixtures with aligned holes for receiving needles.

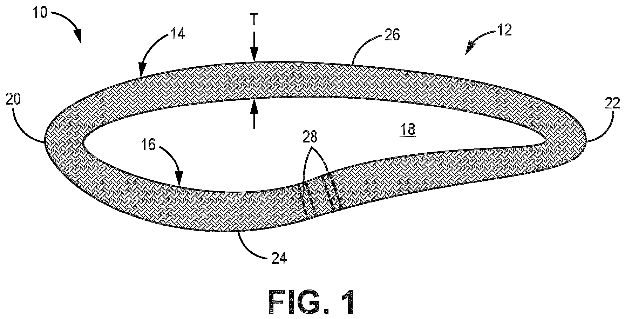

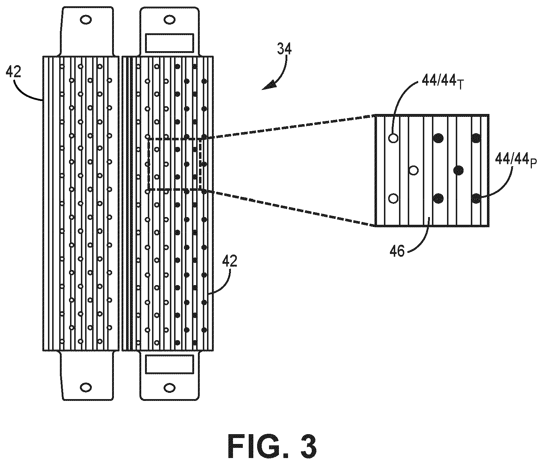

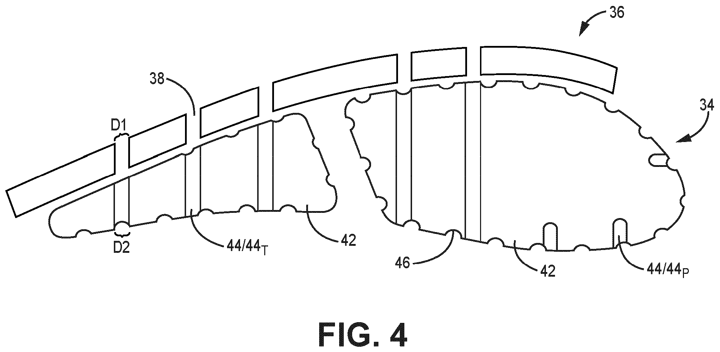

FIG. 1 is a simplified cross-sectional view of preform 10, formed from tows of ceramic (e.g., silicon carbide) fibers arranged in a uni- or multi-axial braided architecture, or various two or three-dimensional woven architectures such as plain, harness (e.g., 3, 5, 8, etc.), twill, or non-symmetric to name a few non-limiting examples. Non-woven architectures (e.g., chopped, felted, etc.) are also contemplated herein. Preform 10 includes continuous wall 12 with outer surface 14, inner surface 16, and thickness T defined there between. Wall 12 defines hollow interior 18. Wall 12 has a curved geometry, and as shown, is shaped like an airfoil, with leading edge 20, oppositely disposed trailing edge 22, pressure side 24, and oppositely disposed suction side 26. Preform 10 can, accordingly, be an airfoil preform for a vane or blade. Other types of curved preforms, such as a blade outer airseal (BOAS) are contemplated herein. Preform 10 can be formed by laying up a fibrous ceramic fabric or braiding a fibrous ceramic fabric over a mandrel (e.g., mandrel 34 of FIGS. 3 and 4) with a shape corresponding to hollow interior 18, such that the mandrel occupies hollow interior 18. The mandrel supports preform 10 and prevents warping or other damage to preform 10 through densification with a ceramic (e.g., silicon carbide) matrix. It can be beneficial to form through-thickness z-channels 28 (two are represented in FIG. 1 in dashed lines) through wall 12 to facilitate the flow of reactant gases during densification, allowing improved densification of the laminate. However, a solid mandrel, such as the type typically used in fabrication of complex CMC components with hollow features can impede the insertion of z-channeling needles completely through wall 12.

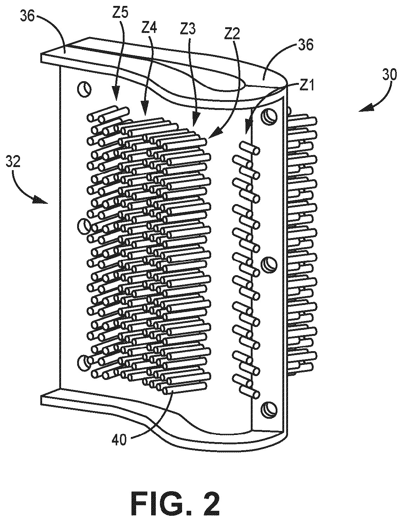

FIGS. 2-4 illustrate various fixtures of a tooling assembly intended to overcome the aforementioned challenges. FIG. 2 is a perspective view of tooling assembly 30 showing outer fixture 32. FIG. 3 is an elevation view of mandrel (i.e., inner fixture) 34 showing a subset of holes 44 in greater detail. FIG. 4 is a cross-sectional view of mandrel 34 and one piece 36 of outer fixture 32. FIGS. 2-4 are discussed together with continued reference to FIG. 1.

Outer fixture 32 generally surrounds preform 10 and mandrel 34, neither of which is visible in FIG. 2. Outer fixture 32 can have a geometry corresponding to preform 10 (i.e., an airfoil-shaped geometry). Outer fixture 32 can include multiple (e.g., two) pieces 36 to facilitate assembly around complexly shaped preforms, such as preform 10. A first piece 36 extends along suction side 26 of preform 10, and a second piece 36 extends along pressure side 24 and leading edge 20. Pieces 36 can be held together by any suitable securing means, such as fasteners, clamps, clips, lids etc. Outer fixture 32 can be perforated with holes 38 (visible in FIG. 4) for receiving needles 40, shown as inserted into tooling assembly 30 and preform 10. Holes 38 can be incorporated throughout tooling assembly 30, based on the number and location of z-channels 28 desired for a particular preform 10. Outer fixture 32 can be formed from a 3D printed/injection molded plastic, metal, or graphite.

Mandrel 34 can be formed as two pieces 42 in an exemplary embodiment, which as shown in FIGS. 3 and 4, includes leading edge piece 42 and trailing edge piece 42. Such a multipiece configuration can be beneficial for accommodating features of an airfoil preform 10, such as a rib (not shown) extending between pressure side 24 and suction side 26. Mandrel 34 can be formed as a single piece 42, or as more than two pieces 42 in an alternative embodiment. Mandrel 34 includes holes 44 corresponding to/aligned with holes 38 of outer fixture 32, as best seen in FIG. 4. This allows for the full penetration of needles 40 through wall 12 of preform 10 to form z-channels 28. Holes 44 can include a mixture of through holes 44_{T}, extending completely through mandrel 34, and blind pockets 44_{P}, which do not extend completely through mandrel 34. Both types of holes 44 permit the full penetration of a respective needle 40 through wall 12 of preform 10, while mitigating interference from multiple needles 40 extending into mandrel 34 at various angles, as is discussed in greater detail below. Mandrel 34 further includes channels 46 about its periphery, extending generally orthogonally to holes 44 in a longitudinal direction of mandrel 34. Channels 46 can provide an additional pathway for reactant gases along inner surface 16 of wall 12 during densification, as mandrel 34 can be used to support preform 10 through densification. As such, mandrel 34 can preferably be formed from graphite.

Each hole 38 of outer fixture 32 can be generally cylindrical with a first diameter D1. Each hole 44 of mandrel 34 can be generally cylindrical with a second diameter D2. D1 can be equal to D2 in one embodiment. Alternatively, D2 can be less than D1 to prevent "pillowing" of fibers from preform 10 into holes 44 during densification. Generally speaking, however, D1 and D2, as well as the overall shape of holes 38 and 44 will be designed to accommodate needles 40. It should be noted that holes 38 and/or 44 need not necessarily be cylindrical in order to receive a respective needle 40, but can have other geometries with curved and/or straight edges. As such diameters D1 and/or D2 can be other dimensions, such as channel widths, as appropriate.

In general, it can be preferable to insert each needle 40 such that it is normal to outer surface 14 of wall 12. In some embodiments, at least some needles 40 can be inserted within 5 degrees of normal (i.e., 0 to 5 degrees), or 10 degrees of normal (i.e., 0 to 10 degrees). In yet other embodiments, at least some needles 40 can be inserted within 15 degrees of normal (i.e., 0 to 15 degrees). Because of the curvature of preform 10 and tooling fixture 30, holes 38 and 44 can be arranged in groups, or zones based on their relative angles and/or needle 40 pathway through tooling assembly 30 in order to achieve a desired angle of entry. FIG. 2 shows needles 40 arranged into such zones. More specifically, needles 40 aligned with leading edge 20 of preform 10 form first zone Z1. Moving aft and onto pressure side 24 are zones Z2, Z3, Z4, and Z5. Zone Z1, as shown, is angled about 90 degrees from zone Z2. In general, some zones can be disposed at non-zero angles relative to other zones. A particular zone can have a counterpart on both sides of tooling assembly 30 (i.e., corresponding to pressure side 24 and suction side 26 of preform 10), in particular where needles 40 traverse through holes 44_{T} in mandrel 34 such that they extend completely through tooling assembly 30. Unpaired zones (e.g., Z1) can exist where needles 40 extend into blind pockets 44_{P}. As shown, zones include a generally longitudinal distribution of respective holes 38, 44, and needles 40, but can be orthogonally (i.e., horizontally) disposed in an alternative embodiment.

During fabrication of a CMC component, preform 10 can be laid up/braided over mandrel 34, as discussed above. Outer fixture 32 can be assembled around preform 10 and mandrel 34 and secured in place. Needles 40 can then be inserted into holes 38 and corresponding holes 44. Needles 40 can then be removed, and outer fixture 32 disassembled and removed. Finally, preform 10 still mounted on mandrel 34, and with z-channels 28, can undergo densification via chemical vapor infiltration (CVI), or other methodology, such as melt infiltration or polymer infiltration and pyrolysis. It should be noted that a graphite outer fixture 32 can be left in place through densification. CMC components fabricated using tooling assembly 30 and needles 40 can be incorporated into aerospace, maritime, or industrial equipment, to name a few, non-limiting examples.

While the invention has been described with reference to an exemplary embodiment(s), it will be understood by those skilled in the art that various changes may be made within the scope of the claims. In addition, many modifications may be made to adapt a particular situation or material also within the scope of the claims. Therefore, it is intended that the invention not be limited to the particular embodiment(s) disclosed, but that the invention will include all embodiments falling within the scope of the appended claims.

## Claims

1. A tooling assembly (30) for use in forming z-channels (28) in a fibrous ceramic preform (10), the tooling assembly (30) comprising:
a mandrel (34) having:
a first plurality of holes (44) extending into a mandrel body, a first subset of the first plurality of holes (44) being through-holes (44_{T}) extending completely through the mandrel (34), and a second subset of the first plurality of holes (44) comprising blind pockets (44_{P}); and
a plurality of channels (46) extending longitudinally along the mandrel (34) in a direction orthogonal to the first plurality of holes (44); and
an outer fixture (32) at least partially enclosing the mandrel (34), the outer fixture (32) comprising:
at least one piece (36) comprising a second plurality of holes (38) extending completely through the at least one piece (36), the second plurality of holes (38) being aligned with respective corresponding ones of the first plurality of holes (44) such that a needle (40) can be inserted through each of the second plurality of holes (38) in the at least one piece (36) and into the respective ones of the first plurality of holes (44) in the mandrel (34).

2. The tooling assembly of claim 1, wherein the at least one piece (36) of the outer fixture (32) comprises a first piece (36) removably securable to a second piece (36).

3. The tooling assembly of claim 1 or 2, wherein the outer fixture (32) is formed from one of plastic, metal, and graphite.

4. The tooling assembly of any preceding claim, wherein the mandrel (34) is a multipiece mandrel (34) comprising a first mandrel piece (42) and a second mandrel piece (42).

5. The tooling assembly of any preceding claim, wherein the mandrel (34) is formed from graphite.

6. The tooling assembly of any preceding claim, wherein each of the first plurality of holes (44) has a first diameter (D2), and optionally wherein each of the second plurality of holes (38) has a second diameter (D1), with the first diameter (D2) being the same as or less than the second diameter (D1).

7. The tooling assembly of any preceding claim, wherein at least a subset of the first plurality of holes (44) is oriented such that a or the needle (40) can be inserted within 10 degrees of normal to an outer surface (14) of the preform (10) supported by the mandrel (34) or within 15 degrees of normal to an outer surface (14) of the preform (10) supported by the mandrel (34).

8. A method of forming z-channels (28) in a fibrous ceramic preform (10), the method comprising:
mounting a ceramic fabric on a mandrel (34);
securing an outer fixture (32) about the mandrel (34) and the ceramic fabric such that the outer fixture (32) at least partially encloses the mandrel (34) and the ceramic fabric;
inserting a needle (40) sequentially through a first hole (38) in the outer fixture (32), a wall (12) of the preform (10) defined by the ceramic fabric, and a corresponding second hole (44_{T}) in the mandrel (34), the second hole (44_{T}) being a through-hole extending completely through the mandrel (34); and
repeating the previous step with a plurality of needles (40) for a plurality of first holes (38) and corresponding second holes (44_{T})
wherein the step of inserting the needle (40) comprises inserting the needle (40) sequentially through the first hole (38) in the outer fixture (32), a first wall (12) of the preform (10) defined by the ceramic fabric, the corresponding second hole (44_{T}) in the mandrel (34), an opposing second wall (12) of the preform (10) defined by the ceramic fabric, and a third hole (38) in the outer fixture (32) corresponding to the first hole (38).

9. The method of claim 8 and further comprising, removing each of the plurality of needles (40).

10. The method of claim 8 or 9, wherein when inserted, a first plurality of needles (40) is disposed at a non-zero angle relative to a second plurality of needles (40).

11. The method of claim 10, wherein a third plurality of needles (40) is disposed at a non-zero angle relative to the first plurality of needles (40) and the second plurality of needles (40).

12. The method of any of claims 8 to 11, wherein the step of inserting the needle (40) further comprises inserting the needle (40) within 10 degrees of normal to an outer surface (14) of the wall (12) of the preform (10).

13. The method of any of claims 8 to 11, wherein the step of inserting the needle (40) further comprises inserting the needle (40) within 15 degrees of normal to an outer surface (14) of the wall (12) of the preform (10).

14. A method of forming a ceramic matrix composite component, the method comprising:
the method of any of claims 8 to 13; and
densifying the fibrous ceramic preform (10) with a matrix.

15. The method of claim 14, wherein the step of densifying the fibrous ceramic preform (10) is carried out using at least one of chemical vapor infiltration, melt infiltration, and polymer infiltration and pyrolysis.

## Patentansprüche

1. Werkzeugbaugruppe (30) zur Verwendung beim Ausbilden von Z-Kanälen (28) in einem faserigen Keramikvorformling (10), wobei die Werkzeugbaugruppe (30) Folgendes umfasst:
einen Dorn (34), der Folgendes aufweist:
eine erste Mehrzahl von Löchern (44), die sich in einen Dornkörper erstrecken, wobei eine erste Teilmenge der ersten Mehrzahl von Löchern (44) Durchgangslöcher (44_{T}) sind, die sich vollständig durch den Dorn (34) erstrecken, und eine zweite Teilmenge der ersten Mehrzahl von Löchern (44) Sacklöcher (44_{P}) umfasst; und
eine Mehrzahl von Kanälen (46), die sich in Längsrichtung entlang des Dorns (34) in einer Richtung senkrecht zu der ersten Mehrzahl von Löchern (44) erstrecken; und
eine äußere Halterung (32), die den Dorn (34) mindestens teilweise umschließt, wobei die äußere Halterung (32) Folgendes umfasst:
mindestens ein Teil (36), umfassend eine zweite Mehrzahl von Löchern (38), die sich vollständig durch das mindestens eine Teil (36) erstrecken, wobei die zweite Mehrzahl von Löchern (38) mit den jeweiligen entsprechenden einen der ersten Mehrzahl von Löchern (44) ausgerichtet ist, so dass eine Nadel (40) durch jedes der zweiten Mehrzahl von Löchern (38) in dem mindestens einen Teil (36) und in die jeweiligen einen der ersten Mehrzahl von Löchern (44) in dem Dorn (34) eingeführt werden kann.

2. Werkzeugbaugruppe nach Anspruch 1, wobei das mindestens eine Teil (36) der äußeren Halterung (32) ein erstes Teil (36) umfasst, das abnehmbar an einem zweiten Teil (36) gesichert werden kann.

3. Werkzeugbaugruppe nach Anspruch 1 oder 2, wobei die äußere Halterung (32) aus einem von Kunststoff, Metall und Graphit ausgebildet ist.

4. Werkzeugbaugruppe nach einem vorhergehenden Anspruch, wobei der Dorn (34) ein mehrteiliger Dorn (34) ist, umfassend ein erstes Dornteil (42) und ein zweites Dornteil (42).

5. Werkzeugbaugruppe nach einem vorhergehenden Anspruch, wobei der Dorn (34) aus Graphit ausgebildet ist.

6. Werkzeugbaugruppe nach einem vorhergehenden Anspruch, wobei jedes der ersten Mehrzahl von Löchern (44) einen ersten Durchmesser (D2) aufweist und optional wobei jedes der zweiten Mehrzahl von Löchern (38) einen zweiten Durchmesser (D1) aufweist, wobei der erste Durchmesser (D2) gleich dem zweiten Durchmesser (D1) oder kleiner als dieser ist.

7. Werkzeugbaugruppe nach einem vorhergehenden Anspruch, wobei mindestens eine Teilmenge der ersten Mehrzahl von Löchern (44) derart ausgerichtet ist, dass eine oder die Nadel (40) innerhalb von 10 Grad der Normalen zu einer äußeren Oberfläche (14) des von dem Dorn (34) getragenen Vorformlings (10) oder innerhalb von 15 Grad der Normalen zu einer äußeren Oberfläche (14) des von dem Dorn (34) getragenen Vorformlings (10) eingeführt werden kann.

8. Verfahren zum Ausbilden von Z-Kanälen (28) in einem faserigen Keramikvorformling (10), wobei das Verfahren Folgendes umfasst:
Montieren eines Keramikgewebes auf einen Dorn (34);
Sichern einer äußeren Halterung (32) um den Dorn (34) und das Keramikgewebe derart, dass die äußere Halterung (32) den Dorn (34) und das Keramikgewebe mindestens teilweise umschließt;
Einführen einer Nadel (40) nacheinander durch ein erstes Loch (38) in der äußeren Halterung (32), eine durch das Keramikgewebe definierte Wand (12) des Vorformlings (10) und ein entsprechendes zweites Loch (44_{T}) in dem Dorn (34), wobei das zweite Loch (44_{T}) ein Durchgangsloch ist, das sich vollständig durch den Dorn (34) erstreckt; und
Wiederholen des vorherigen Schritts mit einer Mehrzahl von Nadeln (40) für eine Mehrzahl von ersten Löchern (38) und entsprechenden zweiten Löchern (44_{T}),
wobei der Schritt des Einführens der Nadel (40) das Einführen der Nadel (40) nacheinander durch das erste Loch (38) in der äußeren Halterung (32), eine durch das Keramikgewebe definierte erste Wand (12) des Vorformlings (10), das entsprechende zweite Loch (44_{T}) in dem Dorn (34), eine durch das Keramikgewebe definierte gegenüberliegende zweite Wand (12) des Vorformlings (10) und ein drittes Loch (38) in der äußeren Halterung (32), das dem ersten Loch (38) entspricht, umfasst.

9. Verfahren nach Anspruch 8, ferner umfassend Entfernen jeder der Mehrzahl von Nadeln (40).

10. Verfahren nach Anspruch 8 oder 9, wobei beim Einführen eine erste Mehrzahl von Nadeln (40) in einem Winkel ungleich Null relativ zu einer zweiten Mehrzahl von Nadeln (40) angeordnet ist.

11. Verfahren nach Anspruch 10, wobei eine dritte Mehrzahl von Nadeln (40) in einem Winkel ungleich Null relativ zu der ersten Mehrzahl von Nadeln (40) und der zweiten Mehrzahl von Nadeln (40) angeordnet ist.

12. Verfahren nach einem der Ansprüche 8 bis 11, wobei der Schritt des Einführens der Nadel (40) ferner das Einführen der Nadel (40) innerhalb von 10 Grad der Normalen zu einer äußeren Oberfläche (14) der Wand (12) des Vorformlings (10) umfasst.

13. Verfahren nach einem der Ansprüche 8 bis 11, wobei der Schritt des Einführens der Nadel (40) ferner das Einführen der Nadel (40) innerhalb von 15 Grad der Normalen zu einer äußeren Oberfläche (14) der Wand (12) des Vorformlings (10) umfasst.

14. Verfahren zum Ausbilden einer Keramikmatrix-Verbundwerkstoffkomponente, wobei das Verfahren Folgendes umfasst:
das Verfahren nach einem der Ansprüche 8 bis 13; und
Verdichten des faserigen Keramikvorformlings (10) mit einer Matrix.

15. Verfahren nach Anspruch 14, wobei der Schritt des Verdichtens des faserigen Keramikvorformlings (10) unter Verwendung von mindestens einer von chemischer Dampfinfiltration, Schmelzinfiltration und Polymerinfiltration und Pyrolyse ausgeführt wird.

## Revendications

1. Ensemble d'outillage (30) destiné à être utilisé pour former des canaux Z (28) dans une préforme en céramique fibreuse (10), l'ensemble d'outillage (30) comprenant :
un mandrin (34) présentant :
une première pluralité de trous (44) s'étendant dans un corps de mandrin, un premier sous-ensemble de la première pluralité de trous (44) étant des trous traversants (44_{T}) s'étendant complètement à travers le mandrin (34), et un second sous-ensemble de la première pluralité de trous (44) comprenant des poches borgnes (44_{P}) ; et
une pluralité de canaux (46) s'étendant longitudinalement le long du mandrin (34) dans une direction orthogonale à la première pluralité de trous (44) ; et
un dispositif de fixation extérieur (32) enveloppant au moins partiellement le mandrin (34), le dispositif de fixation extérieur (32) comprenant :
au moins une pièce (36) comprenant une seconde pluralité de trous (38) s'étendant complètement à travers la au moins une pièce (36), la seconde pluralité de trous (38) étant alignée avec les trous correspondants respectifs de la première pluralité de trous (44), de sorte qu'une aiguille (40) puisse être insérée à travers chacun des trous de la seconde pluralité de trous (38) dans la au moins une pièce (36) et dans les trous correspondants de la première pluralité de trous (44) dans le mandrin (34).

2. Ensemble d'outillage selon la revendication 1, dans lequel la au moins une pièce (36) du dispositif de fixation extérieur (32) comprend une première pièce (36) pouvant être fixée de manière amovible à une seconde pièce (36).

3. Ensemble d'outillage selon la revendication 1 ou 2, dans lequel le dispositif de fixation extérieur (32) est formé à partir de plastique, de métal ou de graphite.

4. Ensemble d'outillage selon une quelconque revendication précédente, dans lequel le mandrin (34) est un mandrin multipièces (34) comprenant une première pièce de mandrin (42) et une seconde pièce de mandrin (42).

5. Ensemble d'outillage selon une quelconque revendication précédente, dans lequel le mandrin (34) est formé de graphite.

6. Ensemble d'outillage selon une quelconque revendication précédente, dans lequel chacun de la première pluralité de trous (44) présente un premier diamètre (D2), et éventuellement dans lequel chacun de la seconde pluralité de trous (38) présente un second diamètre (D1), le premier diamètre (D2) étant le même que le second diamètre (D1) ou inférieur à celui-ci.

7. Ensemble d'outillage selon une quelconque revendication précédente, dans lequel au moins un sous-ensemble de la première pluralité de trous (44) est orienté de telle sorte qu'une aiguille ou l'aiguille (40) puisse être insérée à moins de 10 degrés de la normale à une surface extérieure (14) de la préforme (10) supportée par le mandrin (34) ou à moins de 15 degrés de la normale à une surface extérieure (14) de la préforme (10) supportée par le mandrin (34).

8. Procédé de formation de canaux Z (28) dans une préforme en céramique fibreuse (10), le procédé comprenant :
le montage d'un tissu céramique sur un mandrin (34) ;
la fixation d'un dispositif de fixation extérieur (32) autour du mandrin (34) et du tissu céramique de telle sorte que le dispositif de fixation extérieur (32) enveloppe au moins partiellement le mandrin (34) et le tissu céramique ;
l'insertion d'une aiguille (40) séquentiellement à travers un premier trou (38) dans le dispositif de fixation extérieur (32), une paroi (12) de la préforme (10) définie par le tissu céramique, et un deuxième trou correspondant (44_{T}) dans le mandrin (34), le deuxième trou (44_{T}) étant un trou traversant s'étendant complètement à travers le mandrin (34) ; et
la répétition de l'étape précédente avec une pluralité d'aiguilles (40) pour une pluralité de premiers trous (38) et de deuxièmes trous correspondants (44_{T})
dans lequel l'étape d'insertion de l'aiguille (40) comprend l'insertion séquentielle de l'aiguille (40) à travers le premier trou (38) du dispositif de fixation extérieur (32), une première paroi (12) de la préforme (10) définie par le tissu céramique, le deuxième trou correspondant (44_{T}) dans le mandrin (34), une seconde paroi opposée (12) de la préforme (10) définie par le tissu céramique, et un troisième trou (38) dans le dispositif de fixation extérieur (32) correspondant au premier trou (38).

9. Procédé selon la revendication 8 et comprenant en outre le retrait de chacune de la pluralité d'aiguilles (40).

10. Procédé selon la revendication 8 ou 9, dans lequel, lors de son insertion, une première pluralité d'aiguilles (40) est disposée à un angle non nul par rapport à une deuxième pluralité d'aiguilles (40).

11. Procédé selon la revendication 10, dans lequel une troisième pluralité d'aiguilles (40) est disposée à un angle non nul par rapport à la première pluralité d'aiguilles (40) et à la deuxième pluralité d'aiguilles (40).

12. Procédé selon l'une quelconque des revendications 8 à 11, dans lequel l'étape d'insertion de l'aiguille (40) comprend en outre l'insertion de l'aiguille (40) à moins de 10 degrés de la normale à une surface extérieure (14) de la paroi (12) de la préforme (10).

13. Procédé selon l'une quelconque des revendications 8 à 11, dans lequel l'étape d'insertion de l'aiguille (40) comprend en outre l'insertion de l'aiguille (40) à moins de 15 degrés de la normale à une surface extérieure (14) de la paroi (12) de la préforme (10).

14. Procédé de formation d'un composant composite à matrice céramique, le procédé comprenant :
le procédé selon l'une quelconque des revendications 8 à 13 ; et
la densification de la préforme en céramique fibreuse (10) avec une matrice.

15. Procédé selon la revendication 14, dans lequel l'étape de densification de la préforme en céramique fibreuse (10) est réalisée en utilisant au moins l'un des procédés suivants : infiltration chimique en phase vapeur, infiltration par fusion, infiltration de polymère et pyrolyse.
